# EUROPÄISCHE PATENTSCHRIFT

(11) **EP 4 536 607 B1**
(45) Veröffentlichungstag und Bekanntmachung des Hinweises auf die Patenterteilung: **25.03.2026**
(21) Anmeldenummer: 23730350.8
(22) Anmeldetag: 05.06.2023
(51) Int. Cl.: C04B 26/18, B28B 11/24, B29C 67/24, C04B 111/54, C04B 111/28, C04B 111/10

(54) **KUNSTSTOFFGEBUNDENE ARBEITSPLATTE**
PLASTIC-BONDED WORK TOP
PLAN DE TRAVAIL À LIAISON PAR MATIÈRE PLASTIQUE

(30) Priorität: 10.06.2022 AT 504102022
(43) Veröffentlichungstag der Anmeldung: 16.04.2025
(73) Patentinhaber: Strasser Steine GmbH, 4113 St. Martin im Mühlkreis (AT)
(72) Erfinder: ARTMAYR, Johannes, 4040 Linz (AT)
(74) Vertreter: Hübscher & Partner Patentanwälte GmbH
(86) Internationale Anmeldenummer: PCT/AT2023/060176
(87) Internationale Veröffentlichungsnummer: WO 2023/235907

(56) Entgegenhaltungen:
- EP-A1- 2 409 959
- EP-A2- 2 011 632
- WO-A1-99/05075
- CN-A- 103 342 501
- DE-A1- 19 549 104
- US-A1- 2022 089 485

## Beschreibung

### Technisches Gebiet

Die Erfindung bezieht sich auf eine Arbeitsplatte aus einem durch ein aushärtbares Polymer gebundenen Gesteinsgranulat und gegebenenfalls das äußere Erscheinungsbild beeinflussenden Zusatzstoffen.

### Stand der Technik

Um die außerordentlichen Härteeigenschaften von Quarz für Arbeitsplatten nutzbar zu machen, ist es bekannt, auf Quarz basierende Mineralstoffe, üblicherweise mit einem Gewichtsanteil größer 80 %, mit einem Polymer als Bindemittel zu mischen und die Mischung in einer Form durch mechanischen Druck porenfrei zu verdichten. Das Polymer härtet in der Form aus, sodass anschließend der zu einer Arbeitsplatte geformte Verbundwerkstoff der Form entnommen werden kann. Dem feinkörnigen Quarz können je nach gewünschter Optik Sand, Farbpigmente und auch kleine Glasstücke zugefügt werden, um besondere Effekte zu erzielen. Nachteilig ist allerdings, dass solche Arbeitsplatten nur beschränkt hitzebeständig sind, was den Einsatz solcher Quarzkomposite insbesondere im Küchenbereich einengt.

US 2022/089485 A1 offenbart ein künstliches Agglomeratsteinmaterial, geeignet für die Herstellung mittels Vibrationsverdichtung eines Blocks, einer Platte, eines Bretts oder einer Platte, bestehend aus
- 85-95 Gew.-% anorganischen Füllstoffen, darunter
   -- in Summe 50-70 Gew% bezogen auf das Steinmaterial:
      --- 2-50 Gew.-%, bezogen auf das Steinmaterial, Feldspatgranulat (Partikelgröße D90 10-40 µm) einer spezifischen Oxidkombination der Formel A und einer spezifischen Oxidkombination der Formel B,
      --- 20-48 Gew% bevorzugt recyceltes Silikatglasgranulat (Partikelgröße 63-300 µm),
- 5-15 Gew.-% gehärtetes organisches Harz (gelistet ist u.a. Polyesterharz).

Es wird Wert darauf gelegt, dass der Gehalt an kristallinem Silika (als Verunreinigung im Feldspat) im Füllstoff auf bevorzugt 0-7 Gew% beschränkt ist.

### Darstellung der Erfindung

Der Erfindung liegt somit die Aufgabe zugrunde, eine Arbeitsplatte zu schaffen, die hinsichtlich der Härte und Abriebfestigkeit durchaus mit einer Arbeitsplatte aus einem auf Quarz basierenden, kunstharzgebundenen Verbundwerkstoff vergleichbar ist, im Gegensatz zu einem solchen Quarzkomposit jedoch eine deutlich höhere Hitzebeständigkeit aufweist.

Ausgehend von einer Arbeitsplatte der eingangs geschilderten Art löst die Erfindung die gestellte Aufgabe dadurch, dass die Mischung aus 25 bis 50 Gew.% eines Gesteins aus einer metamorphe Hartgesteine, Granit, Gabbro und Vulkanit umfassenden Gesteinsgruppe mit einer Körnung zwischen 0,2 und 0,8 mm, 0 bis 20 Gew.% Glasgranulat und 37 bis 75 Gew.% Feldspat mit einer Körnung bis 0,8 mm aufweist.

Metamorphe Hartgesteine, aber auch Granit, Gabbro und Vulkanit, welche Gesteine im Hinblick auf die geforderte Härte und Abriebfestigkeit eine Mohshärte von mindestens 5, vorzugsweise mindestens 6, aufweisen sollen, steigern in Verbindung mit dem eingesetzten Feldspat die Hitzebeständigkeit der daraus gefertigten Arbeitsplatten im Vergleich zu Quarzkompositen in überraschender Weise erheblich, nämlich um durchschnittlich 40 bis 50 °C und mehr, sodass erfindungsgemäße Arbeitsplatten vorteilhaft auch im Küchenbereich eingesetzt werden können. Der Feldspat (NaAlSi₃O₈) trägt neben SiO₂ und Na₂O auch Tonerde (Al₂O₃) in das Gemisch ein, was zu einer Erhöhung der chemischen Beständigkeit gegenüber Wasser, Nahrungsmitteln und Umwelteinflüssen führt. Die Wasseraufnahme für erfindungsgemäße Arbeitsplatten beträgt etwa 0,02 %.

Der Feldspat kann vorteilhaft aus einer Vorproduktion der Keramikindustrie stammen. Der aus qualitativen Gründen für die Keramikfertigung nicht einsetzbare, aussortierte und sonst verworfene Anteil des Feldspats eignet sich gut für den erfindungsgemäßen Einsatz.

Durch entsprechende Zusatzstoffe, beispielsweise Pigmente, kann das äußere Erscheinungsbild der Arbeitsplatte beeinflusst werden, wobei sich insbesondere Glas als Zusatzstoff eignet, das einen Anteil bis 20 Gew.% am Gemisch aufweisen kann. Bevorzugt wird ein Anteil des Glasgranulats von 13 bis 19 Gew.% am Gemisch. Dies bedeutet für den angegebenen Anteilsbereich des metamorphen Hartgesteins, Granits, Gabbros oder Vulkanits einen Anteil des Feldspats von 37 bis 56 Gew.% an der Mischung.

Als Gesteine eignen sich insbesondere Granit, Gabbro, Gneis und auch Vulkanit, wobei es durchaus möglich ist, auch mehrere Hartgesteinsarten zur Erreichung besonderer Effekte gemeinsam in einem Gemisch einzusetzen.

Gebunden wird das Gemisch in an sich bekannter Weise mithilfe eines entsprechenden, wärmeaushärtenden Polymers, das vorzugsweise in einer Menge von 9 bis 12 Gew.% des Gemisches diesem zugemischt wird, bevor das mit dem Bindemittel versetzte Gemisch in einer Form unter Hitze und Druck in üblicher Art ausgehärtet wird.

### Wege zur Ausführung der Erfindung

### Ausführungsbeispiel:

Es werden 37 Gewichtsteile eines brasilianischen Granits mit einer durchschnittlichen Körnung von 0,5 mm mit 9 Gewichtsteilen eines Glasgranulats und 44 Gewichtsteilen Feldspat mit einer Körnung bis 0,8 mm unter Zugabe von 10 Gewichtsteilen eines Bindemittels auf Basis eines polymeren Esterharzes gemischt und in einer Form unter Hitze und Druck ausgehärtet. Die Verdichtung erfolgt durch eine Kombination aus einer Vakuum- und Vibrationsbehandlung und einer anschließenden Druckbehandlung von 40 kg/cm². Die Aushärtetemperatur beträgt 85 - 90 °C.

## Patentansprüche

1. Arbeitsplatte aus einer durch ein aushärtbares Polymer gebundenen Mischung eines feinkörnigen Gesteinsgranulats und gegebenenfalls wenigstens einem das äußere Erscheinungsbild beeinflussenden Zusatzstoff, **dadurch gekennzeichnet, dass** die Mischung 25 bis 50 Gew.% eines Gesteins aus einer metamorphe Hartgesteine, Granit, Gabbro und Vulkanit umfassenden Gesteinsgruppe mit einer Körnung zwischen 0,2 und 0,8 mm, 0 bis 20 Gew.% eines Glasgranulats und 37 bis 75 Gew.% eines Feldspats mit einer Körnung bis 0,8 mm aufweist.

2. Arbeitsplatte nach Anspruch 1, **dadurch gekennzeichnet, dass** das Glasgranulat einen Anteil von 13 bis 19 Gew.% und der Feldspat einen Anteil von 37 bis 56 Gew.% an der Mischung aufweist.

3. Arbeitsplatte nach Anspruch 1 oder 2, **dadurch gekennzeichnet, dass** die Mischung wenigstens ein Gestein aus einer Granit, Gabbro, Gneis und Vulkanit umfassenden Gesteinsgruppe aufweist.

## Claims

1. Worktop made from a mixture of fine-grained rock granulate bound by a curable polymer and, if desired, at least one additive that influences the external appearance, **characterised in that** the mixture comprises 25 to 50% by weight of a rock selected from a group of rocks comprising metamorphic hard rock, granite, gabbro and volcanic rock, with a grain size between 0.2 and 0.8 mm, 0 to 20% by weight of glass granulate and 37 to 75% by weight of feldspar with a grain size of up to 0.8 mm.

2. Worktop according to claim 1, **characterised in that** the glass granulate accounts for 13 to 19% by weight and the feldspar accounts for 37 to 56% by weight of the mixture.

3. Worktop according to claim 1 or 2, **characterised in that** the mixture comprises at least one rock selected from a group of rocks comprising granite, gabbro, gneiss and volcanic rock.

## Revendications

1. Plan de travail constitué d'un mélange de roche finement granulée et éventuellement d'au moins un additif qui influe sur l'aspect extérieur, ledit mélange étant lié à l'aide d'un polymère durcissable, **caractérisé en ce que** le mélange présente de 25 à 50 % en poids d'une roche provenant d'un groupe de roches comprenant des roches dures métamorphiques, du granit, du gabbro et de la vulcanite ayant une taille de grain comprise entre 0,2 et 0,8 mm, de 0 à 20 % en poids d'un verre granulé, et de 37 à 75 % en poids d'un feldspath ayant une taille de grain allant jusqu'à 0,8 mm.

2. Plan de travail selon la revendication 1, **caractérisé en ce que** le verre granulé présente une proportion de 13 à 19 % en poids dans le mélange et le feldspath une proportion de 37 à 56 % en poids.

3. Plan de travail selon la revendication 1 ou 2, **caractérisé en ce que** le mélange présente au moins une roche provenant d'un groupe de roches comprenant du granit, du gabbro, du gneiss et de la vulcanite.
